# EUROPÄISCHE PATENTSCHRIFT

(11) **EP 0 306 647 B1**
(45) Veröffentlichungstag und Bekanntmachung des Hinweises auf die Patenterteilung: **19.05.1993**
(21) Anmeldenummer: 88110679.3
(22) Anmeldetag: 05.07.1988
(51) Int. Cl.: B60J 7/047

(54) **Fahrzeugdach mit vorderem und hinterem Deckel**
Vehicle roof with a movable front and rear panels
Toit ouvrant à panneaux avant et arrière pour véhicules automobiles

(30) Priorität: 08.09.1987 DE 3730112
(43) Veröffentlichungstag der Anmeldung: 15.03.1989
(73) Patentinhaber: Webasto AG Fahrzeugtechnik, D-82131 Stockdorf (DE)
(72) Erfinder: Fürst, Arpad, D-8000 München 60 (DE)

(56) Entgegenhaltungen:
- DE-A- 3 149 977
- DE-A- 3 221 487
- DE-A- 3 300 308
- DE-A- 3 307 198
- DE-A- 3 504 570
- DE-A- 3 522 781
- DE-A- 3 532 111
- DE-A- 3 545 869
- DE-B- 1 162 212
- DE-B- 1 946 161
- DE-U- 8 119 662

## Beschreibung

Die Erfindung bezieht sich auf ein Fahrzeugdach mit einem vorderen Deckel und einem hinteren Deckel, die in einer Schließstellung in Fahrzeuglängsrichtung aneinander angrenzend eine in einer festen Dachfläche ausgebildete Dachöffnung verschließen gemäß dem Oberbegriff des Patentanspruchs 1.

Fahrzeugdächer dieser Art sind in unterschiedlichen Ausführungsformen bekannt. Bei einem gattungsgemäßen Fahrzeugdach gemäß DE 31 49 977 A1 ist der hintere Deckel an seiner Vorderkante absenkbar und der vordere Deckel kann in Schräglage mit ebenfalls abgesenkter Vorderkante teilweise über den hinteren Deckel verfahren werden. Das Übereinanderfahren erfolgt nur zu einem Teil, sodaß der insgesamte maximal freigebbare Teil der Dachöffnung auf etwa ein Drittel begrenzt ist. Ferner ragt der vordere Deckel mit seiner Hinterkante über die Fahrzeugkontur hinaus, wodurch Windgeräusche verursacht werden können. Bei einer weiteren Ausführungsform (DE-AS 11 62 212 und DE-OS 33 07 198) ist der hintere Deckel so gelagert, daß er beim Zurückschieben des vorderen Deckels über die feste Dachfläche nach oben im wesentlichen parallel verstellt wird, worauf der vordere Deckel unter dem hinteren Deckel Platz findet. Diese Anordnung führt bei rascher Fahrt zu erhöhtem Luftwiderstand und erheblichen Windgeräuschen. Des weiteren fehlt bei diesen Dächern eine Lüfterstellung, bei welcher die Deckel die Dachöffnung überdecken, aber ein Lüftungsspalt gebildet wird, der in einer im wesentlichen lotrechten Ebene liegt. Bei einer anderen bekannten Ausführungsform eines Daches der vorstehend genannten Art (DE-PS 19 46 161) kann der vordere Deckel nicht nur in Fahrzeuglängsrichtung verschoben, sondern auch mit seinem hinteren Ende über die feste Dachfläche nach oben in eine Lüfterstellung ausgestellt werden. Um Platz für ein Verschieben des vorderen Deckels nach hinten zu schaffen, wird der hintere Deckel parallel zur festen Dachfläche abgesenkt und dann nach hinten unter die feste Dachfläche geschoben. Bei dieser Ausführung ist die Größe der lichten Öffnung, die in der Offenstellung des Daches freigelegt werden kann, in Fahrzeuglängsrichtung erheblich beschränkt, weil sich die feste Dachfläche hinter der Dachöffnung noch um mindestens einen der Länge des hinteren Deckels entsprechenden Betrag erstrecken muß. Der in der Lüfterstellung ausgestellte vordere Deckel führt zu einer unerwünschten Erhöhung des Luftwiderstandes.

Der im Anspruch 1 angegebenen Erfindung liegt die Aufgabe zugrunde, ein Fahrzeugdach der eingangs genannten Art zu schaffen, das auf relativ einfache Weise neben der Offenstellung auch eine Lüftungsstellung erlaubt und bei dem in der Lüftungstellung keine nennenswerte Erhöhung des Luftwiderstandes eintritt.

Diese Aufgabe wird erfindungsgemäß durch die Merkmale im kennzeichnenden Teil des Patentanspruchs 1 gelöst.

Im Falle des erfindungsgemäßen Fahrzeugdaches hat ein Verstellen von der Schließstellung in die Lüfterstellung selbst bei hoher Fahrgeschwindgkeit praktisch keine Änderung des Luftwiderstandes zur Folge. Dadurch, daß der hintere Deckel zusätzlich als Ganzes in eine ein Darüberschieben des vorderen Deckels erlaubende Stellung absenkbar ist, wird es möglich, eine besonders große lichte Öffnung in der Offenstellung des Daches zu erreichen.

Zwar ist bereits ein Fahrzeugdach bekannt (DE-GM 81 19 662), bei dem eine Dachöffnung im hinteren Dachbereich vorgesehen und ein zum Veschließen dieser Dachöffnung geeigneter Deckel mit seiner Vorderkante unter den vorderen Rand der Dachöffnung absenkbar ist.

Bei diesem nur einen einzigen Deckel aufweisenden Fahrzeugdach läßt sich die Dachöffnung allenfalls dadurch freilegen, daß der Deckel in umständlicher Weise ganz abgenommen und im Kraftfahrzeug verstaut wird.

Vorteilhafte weitere Ausgestaltungen der Erfindung ergeben sich aus den Unteransprüchen. Zweckmäßig sind zum Verschwenken des hinteren Deckels an dessen vorderen Bereich beidseitig angreifende Kulissenanordnungen vorgesehen, die jeweils einen mit dem hinteren Deckel verbundenen Kulissenstift und ein entlang einer seitlichen Führungsschiene verschiebbar geführtes Gleitstück mit einem Kulissenschlitz aufweisen, in welchen der Kulissenstift eingreift. Entlang den Führungsschienen sind vorteilhaft ferner mit dem vorderen Deckel auf Mitnahme gekuppelte Gleitstücke verschiebbar geführt. Auf diese Weise wird eine besonders einfache Betätigungsmechanik erhalten. Zur Höhenverstellung des hinteren Deckels kann zu beiden Seiten dieses Deckels vorteilhaft ein weiteres Gleitstück vorgesehen sein, das eine Führungsbahn aufweist, mit dem ein am hinteren Deckel angebrachter Führungsbolzen zusammenwirkt. Im hinteren Bereich des vorderen Deckels kann ein Anlageelement vorgesehen sein, das sich beim Zurückschieben des vorderen Deckels gegen den hinteren Deckel anlegt und diesen zweckmäßig entgegen der Wirkung einer Vorspannfeder nach unten drückt. Für das Verstellen des vorderen und des hinteren Deckels ist vorteilhaft ein gemeinsamer Primärantrieb in Form eines manuellen Antriebs oder eines Motorantriebs vorgesehen, dem ein Verteilergetriebe nachgeschaltet ist. Vorzugsweise ist ferner der vordere Deckel, an beiden Seiten in einem Führungskanal jeweils einer der betreffenden Seitenkante des Deckels zugeordneten Führungsschiene verschiebbar geführt, gegen die sich auch der hintere Deckel in seinem Randbereich in der Deckelschließstellung anlegt. Dies stellt eine einfache und gleichwohl sichere Führung der Deckel sicher.

Das erfindungsgemäße Fahrzeugdach kommt mit einer geringen Bauhöhe aus. Es kann als komplett vormontierte Liefereinheit ausgebildet werden, die in das Fahrzeug von oben eingesetzt wird. Das Fahrzeugdach nach der Erfindung eignet sich auch als Teil eines Dachaufsatzes mit integrierter Lüftungseinrichtung, wie er Gegenstand der DE-OS 35 45 871 ist.

Ein Ausführungsbeispiel der Erfindung wird nachstehend anhand der Zeichnungen näher erläutert. Es zeigt:
- Fig. 1: eine Teildraufsicht auf ein mit dem Fahrzeugdach nach der Erfindung ausgerüstetes Fahrzeug,
- Fig. 2, 3 und 4: Längsschnitts durch das Fahrzeugdach in dessen Schließstellung, Lüftungsstellung bzw. Offenstellung,
- Fig. 5: den Schnitt entsprechend der Linie V-V der Fig. 2,
- Fig. 6: den Schnitt, entsprechend der Linie VI-VI der Fig. 3,
- Fig. 7: den Schnitt entsprechend der Linie VII-VII der Fig. 2,
- Fig. 8: den Schnitt entsprechend der Linie VIII-VIII der Fig. 2, und
- Fig. 9: in größerem Maßstab eine Teildraufsicht auf das Dach unter Weglassung der Deckel.

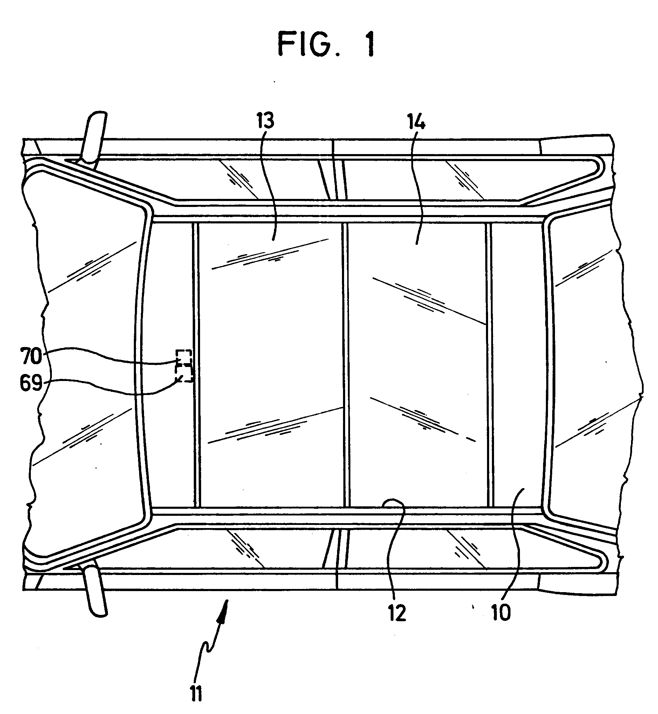

Wie insbesondere aus den Figuren 1-4 hervorgeht, ist in einer festen Dachfläche 10 eines Kraftfahrzeugs 11 eine Dachöffnung 12 vorgesehen, die sich über praktisch die volle Breite des Daches und den größten Teil der Längsabmessung desselben hinweg erstreckt. Die Dachöffnung 12 kann mittels eines vorderen Deckels 13 und eines hinteren Deckels 14 wahlweise verschlossen oder zum Teil freigelegt werden. Die Deckel 13, 14 können insbesondere aus Blech gefertigt sein oder aus einem durchsichtigen oder durchscheinenden Werkstoff, wie Glas oder Kunststoff, bestehen. Im veranschaulichten Ausführungsbeispiel handelt es sich um Glasdeckel. Die Dachöffnung 11 ist von einem unter der festen Dachfläche 10 sitzenden Dachrahmen 15 umfaßt, der eine Wasserrinne 16 bildet. Der Dachrahmen 15 trägt an beiden Seiten der Dachöffnung 12 auf einem an die Wasserrinne 16 nach außen anschließenden Absatz 17 jeweils eine untere Führungsschiene 18, die vorzugsweise über ihre volle Länge hinweg einen gleichförmigen Querschnitt hat und dementsprechend als Strangpreßteil ausgebildet sein kann. Die Führungsschienen 18 erstrecken sich in Fahrzeuglängsrichtung parallel zum Seitenrand 19 der Dachöffnung 12. Die Führungsschienen 18 und die übrigen Bauteile des Daches sind spiegelbildlich symmetrisch zu einer Längssymmetrieachse angeordnet. Infolgedessen reicht es aus, Aufbau und Funktionsweise der Anordnung nur auf der einen Seite im einzelnen zu erläutern.

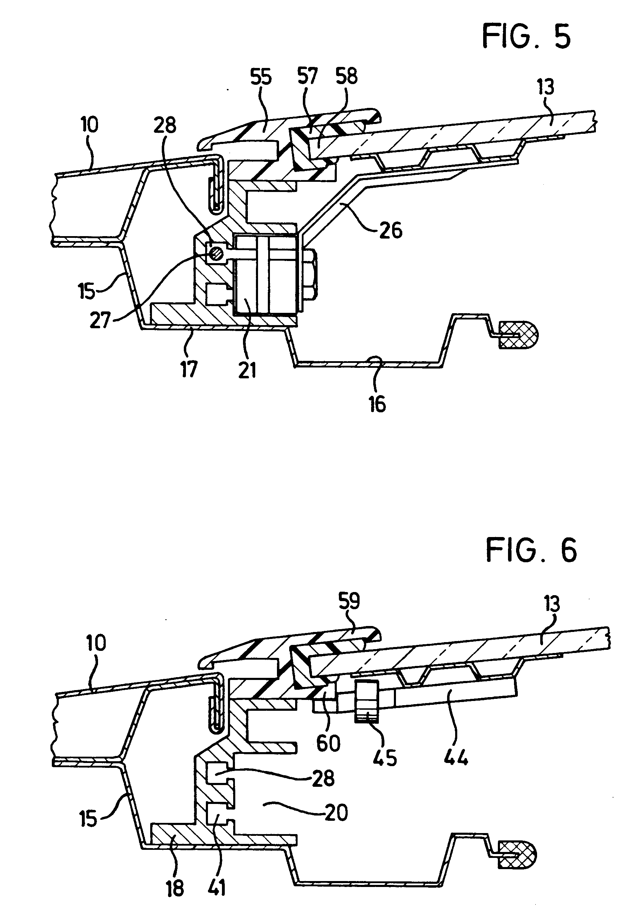

In einem an der Innenseite offenen Führungskanal 20 der Führungsschiene 18 sind drei Gleitstücke 21, 22 und 23 in Längsrichtung der Führungsschiene verschiebbar geführt. Das Gleitstück 21 ist mit dem vorderen Deckel 13 auf Mitnahme gekuppelt. Die Mitnahmekupplung weist einen an dem Gleitstück 21 befestigten Bolzen 24 auf, der in einen lotrechten, nach unten offenen Schlitz 25 einer an der Unterseite des vorderen Deckels 13 sitzenden Lasche 26 verschiebbar eingreift. Der Bolzen 24 und der Schlitz 25 lassen eine gegenseitige Höhenverstellung zwischen dem vorderen Deckel 13 und dem Gleitstück 21 zu. Sie erlauben damit einem relativen Höhenausgleich zwischen der Bahn des Gleitstücks 21 und der Bahn der weiter unten erläuterten Deckelführung. Das Gleitstück 21 steht in Antriebsverbindung mit einem drucksteifen Antriebskabel 27, das in einem oberen Kabelführungskanal 28 der Führungsschiene 18 geführt ist (Fig. 5).

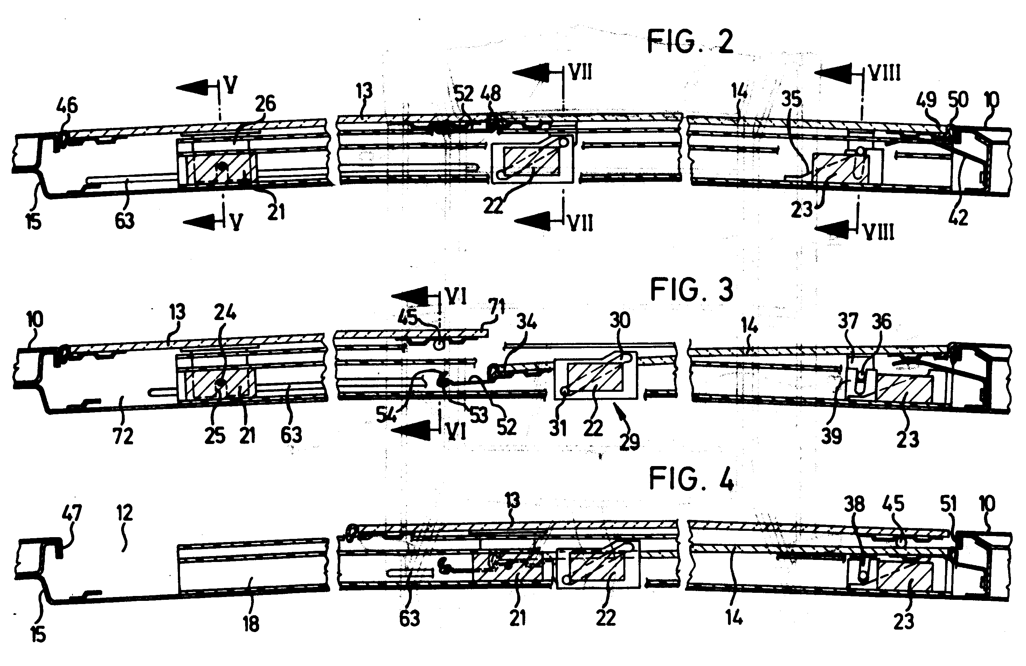

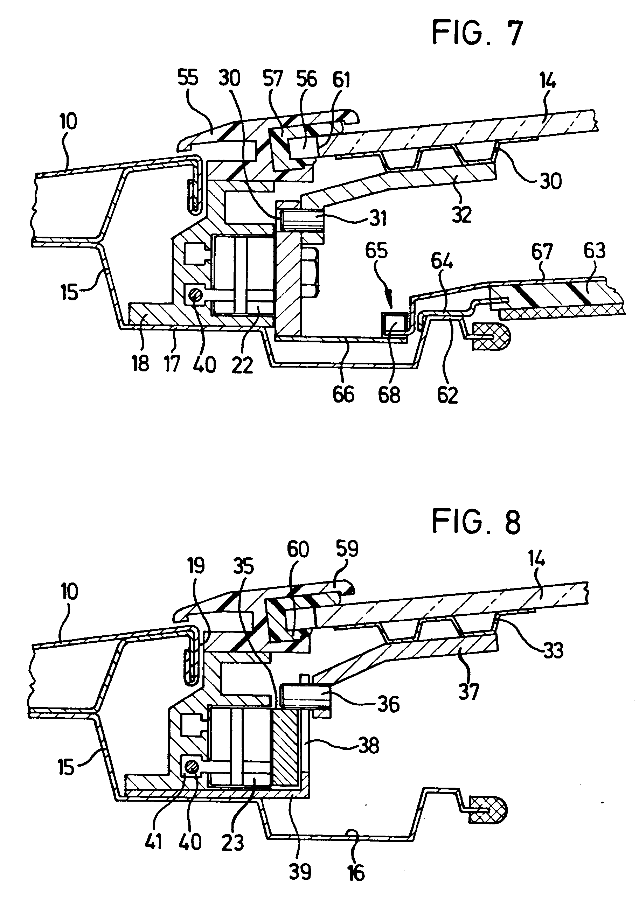

Das Gleitstück 22 ist Teil einer insgesamt mit 29 bezeichneten Kulissenanordnung und weist einen Kulissenschlitz 30 auf, der nach vorne und unten geneigt ist. In dem Kulissenschlitz 30 ist ein Kulissenstift 31 verschiebbar geführt. Der Kulissenstift 31 ist an einer Lasche 32 befestigt, die an einem Deckelinnenblech 33 nahe der Vorderkante 34 des hinteren Deckels 14 angebracht ist. Das hintere Gleitstück 23 ist mit einer nach vorne und unten abfallenden Führungsbahn 35 versehen. Mit der Führungsbann 35 wirkt ein Führungsbolzen 36 zusammen, der an einer Lasche 37 befestigt ist (Fig. 8). Die Lasche 37 ist ihrerseits an dem Dekkelinnenblech 33 im hinteren Bereich des Deckels 14 angebracht. Der Führungsbolzen 36 greift ferner in einen sich nach oben öffnenden Schlitz 38 eines mit der Führungsschiene 18 verbundenen Winkelstücks 39 ein. Der schlitz 38 ist nach vorne und unten leicht geneigt, wie dies aus den Fig.2, 3 und 4 hervorgeht. Beide Gleitstücke 22 und 23 stehen mit einem drucksteifen Antriebskabel 40 in Verbindung. Das Antriebskabel 40 ist in einem unteren Kabelführungskanal 41 der Führungsschiene 18 längsverschiebbar geführt.

Der Kabelführungskanal 41 öffnet sich ebenso wie der darüberliegende Kabelführungskanal 28 in der Außenwand des Gleitstück-Führungskanals 20. Eine mit dem Dachrahmen 15 verbundene Feder 42 legt sich gegen den Deckel 14 nahe dessen Hinterkante von unten an und spannt den Deckel 14 nach oben vor.

An einem die Lasche 26 tragenden Deckelinnenblech 43 des vorderen Deckels 13 ist ein Lagerstift 44 zur drehbaren Lagerung einer Rolle 45 befestigt. Das Deckelinnenblech 43 hält ferner eine sich entlang der Vorderkante des Deckels 13 erstreckende Dichtung 46, die mit dem vorderen Rand 47 der Dachöffnung 12 zusammenwirkt. Entlang der Vorderkante 34 und der Hinterkante 49 des Deckels 14 erstrecken sich eine Dichtung 48 bzw. eine Dichtung 50. Die Dichtung 48 dient dem Abdichten des Randspalts zwischen den Deckeln 13 und 14, während die Dichtung 50 mit dem hinteren Rand 51 der Dachöffnung 12 zusammenwirkt. An dem Deckelinnenblech 33 des hinteren Deckels 14 ist vorne eine Wasserrinne 52 ausgebildet, welche über die Vorderkante 34 des Deckels 14 nach vorne vorragt und im Bereich ihrer Vorderkante eine Dichtung 53 mit einer elastisch verstellbaren Dichtlippe 54 trägt

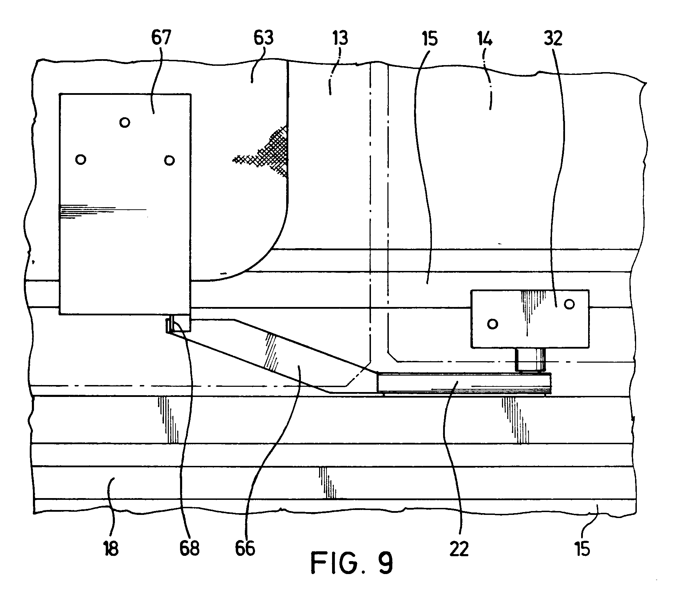

Über der unteren Führungsschiene 18 sitzt eine sich entlang der Seitenwand 19 der Dachöffnung 12 erstreckende obere Führungsschiene 55. Die Führungsschiene 55 weist einen sich in Längsrichtung erstreckenden Führungskanal 56 auf, der mit einer Dichtung 57 ausgekleidet ist. Die Seitenkante 58 des vorderen Deckels 13 greift in den Führungskanal 56 ein und ist in diesem längsverschiebbar geführt. Der Führungskanal 56 wird von einem oberen, in Querrichtung längeren Schenkel 59 und einem unteren in Querrichtung kürzeren Schenkel 60 begrenzt. Der hintere Deckel 14 ist um so viel schmaler als der vordere Deckel 13, daß von den beiden Schenkeln 59, 60 nur der obere Schenkel 59 den Seitenrand 61 des hinteren Deckels 14 seitlich überlappt (Fig.7 und 8. Der Schenkel 59 und der an diesem Schenkel anliegende Teil der Dichtung 57 führen den hinteren Deckel 14 und begrenzen dessen Bewegung nach oben. Der Deckel 14 kann jedoch vorbei an dem unteren Schenkel 60 nach unten abgesenkt werden. Auf einer die Wasserrinne 16 seitlich nach innen begrenzenden Auswölbung 62 des Dachrahmens 15 ist ein Schiebehimmel 63 über Gleitstücke 64 in Fahrzeuglängsrichtung verschiebbar abgestützt (Fig.7). Der Schiebehimmel 63 ist über eine Mitnehmeranordnung 65 mit dem Gleitstück 22 gekoppelt. Die Mitnehmeranordnung 65 weist einen an dem Gleitstück 22 angebrachten und von diesem Gleitstück nach vorne stehenden Mitnehmerhaken 66 auf. Eine an dem Schiebehimmel 63 befestigte Lasche 67 ist mit einer in der Verschiebebahn des Mitnehmerhakens 66 liegenden Nase 68 versehen. Der Mitnehmerhaken 66 legt sich von vorne gegen die Nase 68 an (Fig.9). Die Deckel 13 und 14 sing in Fig. 9 nur mit strichpunktierten Linien angedeutet.

Für den Antrieb des Antriebskabelpaares 27 für die auf beiden Seiten der Dachöffnung befindlichen Gleitstücke 21 und für den Antrieb des Antriebskabelpaares 40 für die Gleitstücke 22 und 23 auf der einen Dachseite und die entsprechenden Gleitstücke auf der anderen Dachseite kann jeweils ein eigener Antriebsmotor vorgesehen sein (vergleiche DE-OS 35 32 111). Vorzugsweise erfolgt der Antrieb der beiden Antriebskabelpaare aber über einen gemeinsamen Primärantrieb 69, dem ein Verteilergetriebe 70 nachgeschaltet ist. Die beiden Baugruppen 69, 70 sind in Fig. 1 nur schematisch angedeutet. Bei dem Primäranantrieb kann es sich insbesondere um eine Handkurbel oder um einen Elektromotor handeln. Das Verteilergetriebe 70 kann zweckmäßig in der aus der DE-OS 35 45 869 bekannten Weise aufgebaut sein.

Zur Erläuterung der Funktionsweise des veranschaulichten Fahrzeugdaches sei angenommen, daß die beiden Deckel 13 und 14 zunächst in der Schließstellung gemäß Fig.2 stehen. Wird ausgehend von dieser Stellung bei festgehaltenem Antriebskabel 27 das Artriebskabel 40 so betätigt, daß die Gleitstücke 22 und 23 gemeinsam nach hinten verschoben werden, wandert der Kulissenstift 31 in dem Kulissenschlitz 30 des Gleistücks 22 nach unten. Dadurch wird der hintere Deckel 14 vorne nach unten in die in Fig.3 veranschaulichte Lüftungsstellung gezogen, in welcher die Vorderkante 34 des hinteren Deckels 14 gegenüber der Hinterkante 71 des vorderen Deckels 13 abgesenkt ist. Die Führungsbahn 35 des gemeinsam mit dem Gleitstück 22 nach hinten geschobenen Gleitstücks 23 gibt den Weg nach unten für den Führungsbolzen 36 frei. Durch den Eingriff zwischen dem Führungsbolzen 36 und dem Schlitz 38 des Winkelstücks 39 wird verhindert, daß der Deckel 14 in einer Zwischenstellung zwischen der Schließstellung (Fig.2) und der Lüftungsstellung (Fig.3) unkontrollierte Bewegungen nach vorne ausführt. Die Feder 42 verhindert ein Absenken der Hinterkante 49 des Deckels 14 in der Lüfterstellung (Fig.3) sowie in Zwischenstellungen zwischen der Lüftungsstellung und der Schließstellung (Fig.2). Wie aus den Figuren 2 und 3 hervorgeht, untergreift die Wasserrinne 52 in der Schließstellung und in der Lüftungsstellung sowie in Zwischenstellungen zwischen diesen beiden Stellungen die Hinterkante 71 des vorderen Deckels 13. Beim Absenken der Vorderkante 34 des hinteren Deckels 14 stellt sich die elastische Dichtlippe 54 der Dichtung 53 am vorderen Rand der Wasserrinne 52 selbsttätig hoch. Dadurch wird zuverlässig verhindert, daß beispielsweise auf dem Deckel 14 stehendes Wasch-oder Regenwasser beim Verschwenken des Deckels 14 in den Fahrzeuginnenraum gelangt.

Im Zuge der Schwenkbewegung des hinteren Deckels 14 aus der Schließstellung (Fig.2) in die Lüftungsstellung (Fig.3) nimmt das nach hinten wandernde Gleitstück 22 über den mit der Nase 68 zusammenwirkenden Mitnehmerhaken 66 den Schiebehimmel 63 selbsttätig mit. Dadurch wird im vorderen Bereich der Dachöffnung 12 ein Lüftungsspalt 72 (Fig. 3) freigegeben. Es versteht sich, daß der Schiebehimmel 63 aus der teilzurückgeschobenen Stellung gemäß Fig.3, falls erwünscht, von Hand weiter nach hinten geschoben werden kann. In entsprechender Weise läßt sich der Schiebehimmel 63 bei geschlossenem Dach manuell betätigen, um den Grad des Lichteinfalls und der Durchsicht durch den vorderen Deckel 13 zu steuern.

Wenn das Antriebskabel 40 in der Lüfterstellung (Fig.3), in welcher der Kulissenstift 31 das vordere untere Ende des Kulissenschlitzes 30 erreicht hat, stillgesetzt und das Antriebskabel 37 nach hinten bewegt wird, wird das Gleitstück 21 entlang der Führungsschiene 18 nach hinten geschoben. Über den Bolzen 24 und die Lasche 26 wird der vordere Deckel 13 mitgenommen. In einer Zwischenstellung zwischen der Lüftungsstellung (Fig. 3) und der in Fig. 4 veranschaulichten Offenstellung legen sich die Rollen 45 seitlich gegen den Rand des hinteren Deckels 14 an. Bei weiterem Zurückbewegen des vorderen Deckels 13 drücken die Rollen 45 den hinteren Deckel 14 entgegen der Vorspannkraft der Feder 42 nach unten. Dabei wird durch die Neigung des Schlitzes 38 in dem Winkelstück 39 erreicht, daß über den Führungsbolzen 36 und die Lasche 37 der Deckel 14 geringfügig nach vorne verlagert wird. Auf diese Weise wird der Anpreßdruck an der Dichtung 50 im Bereich der Hinterkante 49 des Deckels 14 vermindert. Der Deckel 13 kann über den Deckel 14 nach hinten verlagert werden, bis seine Hinterkante 71 den hinteren Rand 51 der Dachöffnung 12 erreicht (Offenstellung gemäß Fig. 4). Es versteht sich, daß der Deckel 13 dabei in jeder beliebigen Zwischenstellung zwischen der Schließstellung (Fig. 3) und der Offenstellung (Fig. 4) angehalten werden kann.

Beim Übergang von der Offenstellung in die Schließstellung laufen die vorstehend erläuterten Bewegungsvorgänge in umgekehrter Richtung und Reihenfolge ab. Der über das Antriebskabel 27 bei stillstehendem Antriebskabel 40 nach vorne gezogene Deckel 13 gibt den Deckel 14 für eine Bewegung nach oben unter dem Einfluß der Feder 42 frei. Dabei wird durch das Zusammenwirken von Führungsbolzen 36 und Schlitz 38 in dem Winkelstück 39 der Deckel 14 leicht nach hinten verlagert. Die Dichtung 50 wird dadurch wieder auf Pressung gebracht. Wird, nachdem der Deckel 13 seine vordere Endstellung erreicht hat und das Antriebskabel 27 stillgesetzt ist, das Antriebskabel 40 nach vorne gezogen, wird der Deckel 14 durch das Zusammenwirken zwischen dem Kulissenschlitz 30 und dem Kulissenstift 31 mit seiner Vorderkante 34 nach oben verschwenkt. Außerdem wird der Führungsbolzen 36 von der Führungsbahn 35 des Gleitstücks 23 nach oben gedrückt. Der Deckel 14 wird mit seiner Oberseite gegen die Dichtung 57 im Führungskanal 56 der oberen Führungsschiene 55 angepreßt.

Das beschriebene Fahrzeugdach kann, wenn der hintere Deckel 14 als Glasdeckel ausgebildet ist, im Bereich dieses Deckels großflächig mit Solarzellen bestückt werdend über die beispielsweise bei abgestelltem Fahrzeug ein Lüfter im Fahrzeuginneren mit Energie versorgt werden kann. Die oberen Führungsschienen 55 können Teil eines die Dachöffnung 12 rings umgreifenden Führungsrahmens sein. Entsprechend einer vereinfachten Ausführungsform kann die Auslegung auch so getroffen sein, daß der hintere Deckel 14 nur im Bereich seiner Vorderkante, nicht aber im Bereich seiner Hinterkante absenkbar ist. In einem solchen Fall wird der vordere Deckel 13 in einer hintersten Stellung angehalten, in welcher seine Hinterkante 71 an der Oberseite des hinteren Deckels 14 anstößt oder nahezu anstößt.

## Patentansprüche

1. Fahrzeugdach mit einem vorderen Deckel (13) und einem hinteren Deckel (14), die in einer Schließstellung in Fahrzeuglängsrichtung aneinander angrenzend eine in einer festen Dachfläche(10) ausgebildete Dachöffnung (12) verschließen, wobei der vordere Deckel (13) zwischen einer die Schließstellung des vorderen Deckels (13) bildenden vorderen Endstellung und einer hinteren Endstellung verstellbar ist, in welcher der vordere Deckel (13) den vorderen Teil der Dachöffnung (12) freilegt, und wobei der hintere Deckel (14) um eine nahe seiner Hinterkante (49) liegende Achse (36) in eine Lüftungsstellung schwenkbar ist, in welcher die Vorderkante (34) des hinteren Deckels (14) gegenüber der Hinterkante (71) des vorderen Deckels (13) nach unten verschwenkt ist, **dadurch gekennzeichnet,** daß der vordere Deckel (13) für eine rein translatorische Verschiebung zwischen der vorderen und der hinteren Endstellung geführt ist und daß der hintere Deckel (14) als Ganzes aus seiner Schließstellung in eine ein Darüberschieben des vorderen Deckels (13) erlaubende Stellung absenkbar ist.

2. Fahrzeugdach nach Anspruch 1, gekennzeichnet durch dem Verschwenken des hinteren Deckels (14) dienende und an dessen vorderem Bereicht beidseitig angreifende Kulissenanordnungen (29), die jeweils ein mit dem hinteren Deckel verbundenes Teil (Kulissenstift 31) und ein entlang einer seitlichen, sich in Längsrichtung des Fahrzeugs erstreckenden Führungsschiene (18) verschiebbar geführtes Teil (Gleitstück 22) aufweisen.

3. Fahrzeugdach nach Anspruch 2, dadurch gekennzeichnet, daß das mit dem hinteren Deckel (14) verbundene Teil der Kulissenanordnung (29) ein Kulissenstift (31) und das verschiebbar geführte Teil ein mit einem Kulissenschlitz (30) versehenes Gleitstück (22) ist, in dessen Kulissenschlitz der Kulissenstift eingreift.

4. Fahrzeugdach nach einem der Ansprüche 2 bis 3, gekennzeichnet durch eine im hinteren Bereich des hinteren Deckels (14) angreifende Höhenverstellvorrichtung zur Höhenverstellung des hinteren Endes des hinteren Deckels.

5. Fahrzeugdach nach Anspruch 2 oder 3 und Anspruch 4, dadurch gekennzeichnet, daß die Höhenverstellvorrichtung zu beiden Seiten des hinteren Deckels (14) je ein weiteres Gleitstück (23) und einen mit dem hinteren Deckel (14) indessen hinterem Bereich verbundenen Führungsbolzen (36) aufweist, der entlang einer Führungsbahn (35) des weiteren Gleitstücks verschiebbar geführt ist.

6. Fahrzeugdach nach Ansprüchen 3 und 5, dadurch gekennzeichnet, daß die Gleitstücke (22) der Kulissenanordnungen (29) und die Gleitstücke (23) der Höhenverstellvorrichtung gemeinsam verschiebbar sind.

7. Fahrzeugdach nach einem der vorhergehenden Ansprüche, dadurch gekennzeichnet, daß dem hinteren Deckel (14) eine Längsverstellvorrichtung (Führungsbolzen 36, Schlitz 38) zugeordnet ist, die dem hinteren Deckel beim Verschwenken eine begrenzte Translationsbewegung in Richtung der Führungsschienen (18) aufzwingt.

8. Fahrzeugdach nach Anspruch 8, dadurch gekennzeichnet, daß die Längsverstellvorrichtung eine stationäre Kulisse (Winkelstück 39) mit einem mit dem Führungsbolzen (36) der Höhenvorstellvorrichtung zusammenwirkenden Schlitz (38) aufweist.

9. Fahrzeugdach nach einem der Ansprüche 4 bis 8, dadurch gekennzeichnet, daß die Höhenverstellvorrichtung mindestens eine den hinteren Deckel (14) in seinem hinteren Bereich nach oben vorspannende Feder (42) aufweist.

10. Fahrzeugdach nach einem der Ansprüche 4 bis 9, dadurch gekennzeichnet, daß zu der Höhenverstellvorrichtung mindestens ein im hinteren Bereich des vorderen Deckels (13) sitzendes Anlageelement (Rolle 45) gehört, das sich beim Zurückschieben des vorderen Deckels gegen den hinteren Deckel (14) anlegt und diesen nach unten drückt.

11. Fahrzeugdach nach Anspruch 10, dadurch gekennzeichnet, daß als Anlageelement eine an der Unterseite des vorderen Deckels (13) drehbar gelagerte Rolle (45) vorgesehen ist.

12. Fahrzeugdach nach einem der Ansprüche 2 bis 11, dadurch gekennzeichnet, daß entlang den Führungsschienen (18) ferner mit dem vorderen Deckel (13) auf Mitnahme gekuppelte Gleitstücke (21) verschiebbar geführt sind.

13. Fahrzeugdach nach Anspruch 12, dadurch gekennzeichnet, daß die Mitnahmekupplung (Bolzen 24, Schlitz 25) zwischen dem vorderen Deckel (13) und den diesem Deckel zugeordneten Gleitstücken (21) derart ausgebildet ist, daß sie eine gegenseitige Höhenverstellung zwischen dem vorderen Deckel und den Gleitstücken zuläßt.

14. Fahrzeugdach nach einem der vorhergehenden Ansprüche, dadurch gekennzeichnet, daß für das Verstellen des vorderen und des hinteran Deckels (13, 14) ein gemeinsamer Primärantrieb (69) mit nachgeschaltetem Verteilergetriebe (70) vorgesehen ist.

15. Fahrzeugdach nach einem der vorhergehenden Ansprüche, dadurch gekennzeichnet, daß die dem vorderen und dem hinteren Deckel (13, 14) zugeordneten Gleitstücke (21, 22, 23) mit Antriebskabeln (27, 40) verbunden sind, die in den Führungsschienen (18) geführt sind.

16. Fahrzeugdach nach einem der vorhergehenden Ansprüche, dadurch gekennzeichnet, daß der vordere Deckel (13) an beiden Seiten in einem Führungskanal (56) jeweils einer der betreffenden Seitenkante (58) des Deckels zugeordneten Führungsschiene (55) verschiebbar geführt ist.

17. Fahrzeugdach nach Anspruch 16, dadurch gekennzeichnet, daß der Führungskanal (56) von einem oberen, in Querrichtung längeren Schenkel (59) und einem unteren, in Querrichtung kürzeren Schenkel (60) begrenzt ist, und daß der hintere Deckel (14) um soviel schmaler als der vordere Deckel (13) ist, daß von den beiden Schenkeln nur der obere den Seitenrand (61) des hinteren Deckels seitlich überlappt.

18. Fahrzeugdach nach einem der vorhergehenden Ansprüche, dadurch gekennzeichnet, daß der hintere Deckel (14) vorne eine Wasserrinne (52) trägt, welche die Hinterkante (71) des in seiner vorderen Endstellung stehenden vorderen Deckels (13) untergreift.

19. Fahrzeugdach nach Anspruch 18, dadurch gekennzeichnet, daß an dem vorderen Ende der Wasserrinne (52) eine Dichtung (53) mit einer gegenüber der Wasserrinne elastisch verstellbaren Dichlippe (54) sitzt, die sich beim Absenken der Vorderkante (34) des hinteren Deckels (14) selbsttätig hochstellt.

20. Fahrzeugdach nach einem der vorhergehenden Ansprüche, gekennzeichnet durch einen in Fahrzeuglängsrichtung verschiebbaren Schiebehimmel (63), der über eine Mitnehmeranordnung (65) mit dem Antrieb des hinteren Deckels (14) derart gekoppelt ist, daß beim Verschwenken des hinteren Deckels in die Lüfterstellung der Schiebehimmel ausgehend von einer vorderen Schließstellung selbsttätig um ein vorbestimmtes Stück nach hinten verschoben wird.

21. Fahrzeugdach nach Anspruch 20, dadurch gekennzeichnet, daß die Mitnehmeranordnung (65) auf beiden Seiten der Dachöffnung (12) jeweils einen Mitnehmerhaken (66) aufweist, sowie daß die Mitnehmerhaken mit den Gleitstücken (22) der Kulissenanordnungen (29) verbunden sind und sich in der Schließstellung des Schiebehimmels (63) von vorne gegen jeweils eine Nase (68) des Schiebehimmels anlegen.

## Claims

1. A vehicle roof with a front cover (13) and a rear cover (14) which, in a closed position and adjoining each other in the longitudinal direction of the vehicle close a roof aperture (12) constructed in a fixed roof surface (10), the front cover (13) being displaceable between an extreme forward position which constitutes the closed position of the front cover (13) and an extreme rear position in which the front cover (13) exposes the front part of the roof aperture (12), the rear cover (14) being pivotable about an axis (36) disposed close to its rear edge (49) into a ventilation position in which the leading edge (34) of the rear cover (14) is downwardly pivoted in relation to the rear edge (71) of the front cover (13), characterised in that the front cover (13) is guided for a purely translatory displacement between the front and rear extreme positions and in that the rear cover (14) as a whole can be lowered out of its closed position into a position which allows the front cover (13) to be pushed over it.

2. A vehicle roof according to Claim 1, characterised by bracket assemblies (29) used for pivoting the rear cover (14) and engaging both sides of the front portion thereof, the said bracket assemblies each having a part (link pin 31) connected to the rear cover and a part (sliding member 22) guided for displacement along a lateral guide rail (18) extending in the longitudinal direction of the vehicle.

3. A vehicle roof according to Claim 2, characterised in that the part of the bracket assembly (29) which is connected to the rear cover (14) is a link pin (31) and the displaceably guided part is a sliding member (22) provided with a bracket slot (30) engaged by the link pin.

4. A vehicle roof according to one of Claims 2 to 3, characterised by, engaging the rear portion of the rear cover (14), a height adjustment device for adjusting the height of the rear end of the rear cover.

5. A vehicle roof according to Claim 2 or 3 and Claim 4, characterised in that the height adjustment device has on both sides of the rear cover (14) a further sliding member (23) and, connected to the rear part of the rear cover (14) a guide pin (36) guided for displacement along a guide track (35) in the additional sliding member.

6. A vehicle roof according to Claims 3 and 5, characterised in that the sliding members (22) of the bracket assemblies (29) and the sliding member (23) of the height adjustment device are jointly displaceable.

7. A vehicle roof according to one of the preceding Claims, characterised in that associated with the rear cover (14) is a longitudinal displacement device (guide pin 36, slot 38) which during pivoting imposes on the rear cover a limited translatory movement in the direction of the guide rails (18).

8. A vehicle roof according to Claim 8, characterised in that the longitudinal displacement device comprises a stationary bracket (angled member 39) with a slot (38) cooperating with the guide pin (36) of the height adjustment device.

9. A vehicle roof according to one of Claims 4 to 8, characterised in that the height adjustment device comprises at least one spring (42) which exerts an upwards biasing action on the rear part of the rear cover (14).

10. A vehicle roof according to one of Claims 4 to 9, characterised in that belonging to the height adjustment device and seated in the rear part of the front cover (13) is at least one bearing element (roller 45) which, when the front cover is pushed backwardly, bears against the rear cover (14) and presses this downwardly.

11. A vehicle roof according to Claim 10, characterised in that a roller (45) rotatably mounted on the underside of the front cover (13) is provided as the bearing element.

12. A vehicle roof according to one of Claims 2 to 11, characterised in that sliding members (21) are guided for displacement along the guide rails (18) and are furthermore drivably coupled to the front cover (13).

13. A vehicle roof according to Claim 12, characterised in that the driving coupling (pin 24, slot 25) between the front cover (13) and the sliding members (21) associated with it is so constructed that it allows a reciprocal height adjustment between the front cover and the sliding members.

14. A vehicle roof according to one of the preceding Claims, characterised in that for displacement of the front and of the rear covers (13, 14) a joint primary drive (69) is provided which has on the downstream side a distributor gear (70).

15. A vehicle roof according to one of the preceding Claims, characterised in that the sliding members (21, 22, 23) associated with the front and rear covers (13, 14) are connected to drive cables (27, 40) which are guided in the guide rails (18).

16. A vehicle roof according to one of the preceding Claims, characterised in that the front cover (13) is guided on both sides in a guide channel (56) of a guide rail (55) associated with the respective lateral edge (58) of the cover.

17. A vehicle roof according to Claim 16, characterised in that the guide channel (56) is defined by an upper arm (59) which is longer in the transverse direction and a lower arm (60) which is shorter in the transverse direction and in that the rear cover (14) is narrower than the front cover (13) by so much that of the two arms only the upper laterally overlaps the lateral edge (61) of the rear cover.

18. A vehicle roof according to one of the preceding Claims, characterised in that the rear cover (14) has at the front a gutter (52) which engages under the rear edge (71) of the front cover (13) which is in its extreme forward position.

19. A vehicle roof according to Claim 18, characterised in that seated at the front end of the water gutter (52) is a gasket (53) having a sealing lip (54) which is resiliently deflectable in relation to the water gutter and which turns upwards automatically upon lowering of the front edge (34) of the rear cover (14).

20. A vehicle roof according to one of the preceding Claims, characterised by, displaceable in the longitudinal direction of the vehicle, a sliding liner (63) which is so coupled by an entraining arrangement (65) to the drive of the rear cover (14) that upon pivoting of the rear cover into the ventilation position the sliding liner is displaced rearwardly by a predetermined amount automatically from a front closed position.

21. A vehicle roof according to Claim 20, characterised in that the entraining arrangement (65) has on both sides of the roof aperture (12) an entraining hook (66) and in that the entraining hooks are connected to the sliding members (22) of the bracket assemblies (29) and, in the closed position of the sliding liner (63), bear from the front against respective catches (68) on the sliding liner.

## Revendications

1. Toit ouvrant comportant un panneau avant (13) et un panneau arrière (14) fermant une ouverture (12) réalisée dans une surface fixe (10) du toit, dans la direction longitudinale du véhicule, les panneaux étant adjacents l'un à l'autre, le panneau avant (13) étant réglable entre une position de fin de course avant constituant la position de fermeture et une position de fin de course arrière pour laquelle le panneau avant (13) dégage la partie avant de l'ouverture du toit (12) et le panneau arrière (14) bascule autour d'un axe (36) proche de son bord arrière (49) pour passer dans une position d'aération, pour laquelle le bord avant (34) du panneau arrière (14) est basculé vers le bas par rapport au bord arrière (71) du panneau avant (13), caractérisé en ce que le panneau avant (13) est guidé entre sa position de fin de course avant et sa position de fin de course arrière dans un coulissement correspondant uniquement à un mouvement de translation, et le panneau arrière (14) peut être abaissé globalement de sa position de fermeture dans une position permettant au panneau avant (14) de coulisser par-dessus lui.

2. Toit ouvrant selon la revendication 1, caractérisé par des coulisses (29) servant au basculement du panneau arrière (14) en étant en prise avec les deux côtés de la zone avant de ce panneau, ces coulisses (29) ayant chacune une partie (ergot de coulisse 31) reliée au panneau arrière et une partie (coulisseau (22)) guidée en coulissement le long d'un rail de guidage (18), latéral, disposé dans le sens de la longueur du véhicule.

3. Toit ouvrant selon la revendication 2, caractérisé en ce que la partie de coulisse (29) reliée au panneau arrière (14) est un ergot à coulisse (31) et la partie guidée en coulissement est un coulisseau (22) muni d'une fente de coulisse (30), l'ergot à coulisse pénétrant dans cette fente de coulisse.

4. Toit ouvrant selon l'une des revendications 2 et 3, caractérisé par un dispositif de réglage en hauteur en prise avec la zone arrière du panneau (14) pour régler en hauteur l'extrémité arrière du panneau arrière.

5. Toit ouvrant selon les revendications 2 ou 3 et la revendication 4, caractérisé en ce que le dispositif de réglage en hauteur comporte des deux côtés du panneau arrière (14), chaque fois un autre coulisseau (23) et un goujon de guidage (36) relié à la zone arrière du panneau arrière (16), ce goujon de guidage étant guidé le long d'un chemin de guidage (35) de l'autre coulisseau.

6. Toit ouvrant selon les revendications 3 et 5, caractérisé en ce que les coulisseaux (22) des coulisses (29) et les coulisseaux (23) du dispositif de réglage en hauteur coulissent en commun.

7. Toit ouvrant selon l'une des revendications précédentes, caractérisé en ce qu'un dispositif de réglage longitudinal (goujon de guidage (36), fente (38)) est associé au panneau arrière (14), ce dispositif commandant un mouvement de translation limité du panneau arrière lors du basculement, en direction des rails de guidage (18).

8. Toit ouvrant selon la revendication 8, caractérisé en ce que le dispositif de réglage en longueur comprend une coulisse fixe (cornière (39)) avec une fente (38) coopérant avec le goujon de guidage (36) du dispositif de réglage en hauteur.

9. Toit ouvrant selon l'une des revendications 4 à 8, caractérisé en ce que le dispositif de réglage en hauteur comprend au moins un ressort (42), précontraint vers le haut, dans la zone arrière du panneau arrière (14).

10. Toit ouvrant selon l'une des revendications 4 à 9, caractérisé en ce que le dispositif de réglage en hauteur comprend au moins un élément d'appui (galet (45)) qui se trouve dans la zone arrière du panneau avant (13), cet élément s'appliquant contre le couvercle arrière (14) lors du coulissement vers l'arrière du couvercle avant et comprimant ce couvercle arrière.

11. Toit ouvrant selon la revendication 10, caractérisé en ce que l'élément d'appui est un galet (45) monté à rotation sous la face inférieure du panneau avant (13).

12. Toit ouvrant selon l'une des revendications 2 à 11, caractérisé en ce que des patins, couplés pour l'entraînement avec le panneau avant (13), sont guidés en coulissement le long des rails de guidage (12).

13. Toit ouvrant selon la revendication 12, caractérisé en ce que le couplage d'entraînement (goujon (24), fente (25)) entre le panneau avant (13) et les patins (21) associés à ce panneau est réalisé pour permettre un réglage en hauteur réciproque entre le panneau avant et les patins.

14. Toit ouvrant selon l'une des revendications précédentes, caractérisé par un moyen d'entraînement principal (69) commun suivi d'une transmission de répartition (70) pour régler le panneau avant et le panneau arrière (13, 14).

15. Toit ouvrant selon l'une des revendications précédentes, caractérisé en ce que les patins (21, 22, 23) associés au panneau avant et au panneau arrière (13, 14) sont reliés à des câbles d'entraînement (27, 40) guidés dans les rails de guidage (18).

16. Toit ouvrant selon l'une des revendications précédentes, caractérisé en ce que le panneau avant (13) est guidé des deux côtés dans un canal de guidage (56) dans un rail de guidage (55) associé chaque fois à l'un des côtés latéraux respectifs (58) du panneau.

17. Toit ouvrant selon la revendication 16, caractérisé en ce que le canal de guidage (56) est délimité par une branche (59), supérieure, plus longue dans la direction transversale, et par une branche inférieure (60) plus courte dans la direction transversale, le panneau arrière (14) étant plus étroit que le panneau avant (13) pour que sur les deux branches seul le bord latéral (61) supérieur du panneau arrière se chevauche latéralement.

18. Toit ouvrant selon l'une des revendications précédentes, caractérisé en ce que le panneau arrière (14) porte à l'avant une gouttière (52) qui passe sous le bord arrière (71) du panneau avant (13) lorsque celui-ci occupe sa position de fin de course avant.

19. Toit ouvrant selon la revendication 18, caractérisé par un joint (53) avec une lèvre d'étanchéité (54) réglable élastiquement par rapport à la gouttière, au niveau de l'extrémité avant de la gouttière (52), cette lèvre se relevant automatiquement lors de l'abaissement du bord avant (34) du panneau arrière (14).

20. Toit ouvrant selon l'une des revendications précédentes, caractérisé par un cache (63) coulissant dans la direction longitudinale du véhicule, et qui est couplé à l'entraînement du panneau arrière (14) par un moyen d'entraînement (65) pour qu'en cas de basculement du panneau arrière en position d'aération, le cache soit déplacé vers l'arrière, d'une certaine longueur, automatiquement en partant de la position de fermeture avant.

21. Toit ouvrant selon la revendication 20, caractérisé en ce que le moyen d'entraînement (65) comporte, des deux côtés de l'ouverture de toit (12), un crochet d'entraînement (66) et les crochets d'entraînement sont reliés aux patins (22) des coulisses (29) et s'appliquent en position de fermeture du cache (63), par l'avant, contre chaque fois un bec (68) du cache.
